# EUROPEAN PATENT APPLICATION

(11) **EP 0 684 591 A1**
(43) Date of publication of application: **29.11.1995**
(21) Application number: 95303379.2
(22) Date of filing: 19.05.1995
(51) Int. Cl.: G08B 3/10

(54) **Radio selective calling receiver and calling sound control method therefor**

(30) Priority: 23.05.1994 JP 107337/94
(71) Applicant: NEC CORPORATION, Tokyo (JP)
(72) Inventor: Makino, Tetsuya, c/o NEC Shizuoka, Ltd., Kakegawa-shi, Shizuoka (JP); Miyashita, Mafumi, c/o NEC Corporation, Minato-ku, Tokyo (JP)
(74) Representative: Cozens, Paul Dennis

(57) **Abstract**

A user can set melody information formed of pattern information and sound frequency information sequentially at each time slot by operating a switching section (4), while looking at characters on a display screen of an LCD (7). The melody information is stored in a RAM (52) controlled by a CPU (53). When a receiver receives the call, a control section (5) receives the data signal and the CPU (53) reads out the melody information stored in the RAM (52) to be output to an alert section (8). A loud speaker (10) serves to notify the call by producing the melody preset by the user.

## Description

This invention relates to a radio selective calling receiver and, more particularly, to a radio selective calling receiver using a melody as a call sound as well as alerting. The invention also relates to a calling sound control method for a radio selective calling receiver.

Recently radio selective calling receivers have increasingly spread throughout the world. They have been conventionally demanded mainly for business use. However more and more the receivers have been demanded for private use. This trend has compelled them to offer much option in design or call sound to satisfy a wide variety of individual users' tastes.

As a solution to meet the demand, a calling receiver using a certain melody as a call sound has been proposed so as to call up a user in a comfortable manner.

The following description is about a first prior art which uses a melody as a call sound, which has been disclosed in Japanese Patent Laid-Open No.27821 (1990).

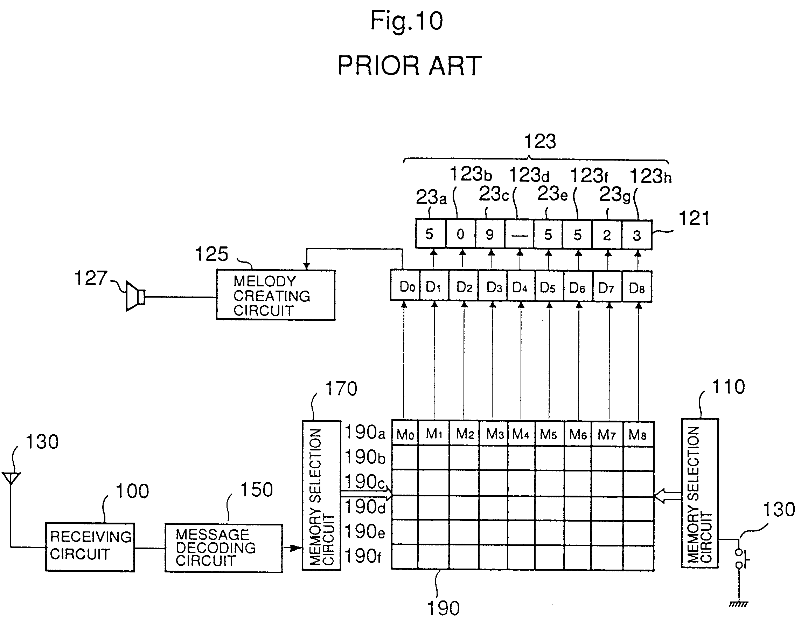

Fig.10 is a block diagram of the first prior art.

In a radio selective calling receiver of the first prior art, when a receiving circuit 100 receives message information via an antenna 130, a message decode circuit 150 compares its own calling number with the calling number contained in the message information. If those numbers coincide, a characteristic sound code (code for creating a melody) and communication information contained in the message information is stored in a memory section 190 selected by a memory selecting circuit 170.

When a memory selecting circuit 110 selects the memory section in which the characteristic sound code (code for creating a melody) and communication message are stored, they are output to a display memory 121. A display device 123 displays the communication information sent from the display memory 121.

After inputting the characteristic sound code from the display memory 121, a melody producing circuit 125 outputs melody signals corresponding to the characteristic sound codes to a loud speaker 127 for outputting the melody.

The melody creating circuit 125 has a melody signal creating section where melody signals corresponding to the characteristic sound codes have been preset.

The following description is about a second prior art disclosed in Japanese Patent Publication No.25972 (1991).

Fig.11 is a block diagram of the second prior art.

Fig.12 is a control flow chart.

The radio selective calling receiver of the second prior art has first and second calling numbers. When the first calling number is called, a melody is produced for calling.

When a receiving circuit 210 receives message information via an antenna 290, a decoder 211 compares its first and second calling numbers with a calling number contained in the message information.

If the received calling number coincides with the first calling number, the message information is output to CPU 212.

After identifying a function area of the message information (T11), the CPU 212 identifies a function flag (T12).

If the function flag is identified as 00, a melody A is selected from a memory in the CPU 212 (T13). Likewise if it is identified as 01, a melody B (T14), if identified as 10, a melody C (T15), if identified as 11, a melody D is selected (T16), respectively. If no function flag is found, an alert sound is selected (T17). The selected sound is output from a loud speaker 215 to notify that the calling has been made to the first calling number. The communication information is displayed on a display circuit 214.

While if the second calling number is called, only an alert sound is produced for notification.

The receiver of this type allows the user to assign the first call for a regular use, and the second call for urgency for producing different notification sounds. It helps the user to identify which calling number is being called.

Both the first and second prior art documents disclose only a limited number of preset melodies (tunes), which fail to offer a variety of calling sounds and to satisfy the users' requirements for personal use.

It is an aim of the present invention to solve the above-mentioned problems.

It is another aim of the present invention to provide a radio selective calling receiver enabling a user to produce a melody as a calling sound.

The aims of the present invention can be achieved by a radio selective calling receiver comprising: inputting means for inputting information to compose a melody; generating means for generating melody information including sound pattern information indicating existence of a sound and sound frequency information indicating each sound frequency of the sound pattern, based on information input from the inputting means; storing means for storing the melody information; reading means for reading out the melody information from the storing means when own radio selective calling receiver has been called; and sounding means for outputting a melody sound based on read out the melody information.

In the radio selective calling receiver, when a user inputs melody information it is stored in storing means of the radio selective calling receiver. Then, being called, the radio selective calling receiver outputs a melody sound composed by the user based on melody information stored in the storing means to notify calling.

As aforementioned, the present invention allows a user to compose a desired call sound, thus providing unsatisfied users with a wider range of choice of the call sounds (tunes).

Other aims and features of the present invention will be described in more detail, purely by way of example, with reference to the accompanying drawings, in which:

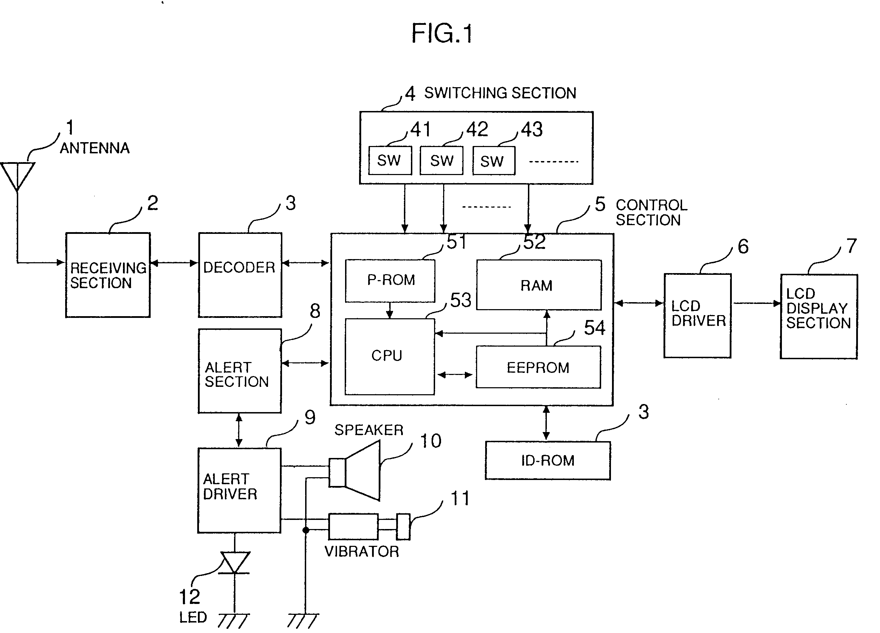

Fig.1 is a block diagram of a radio selective calling receiver;

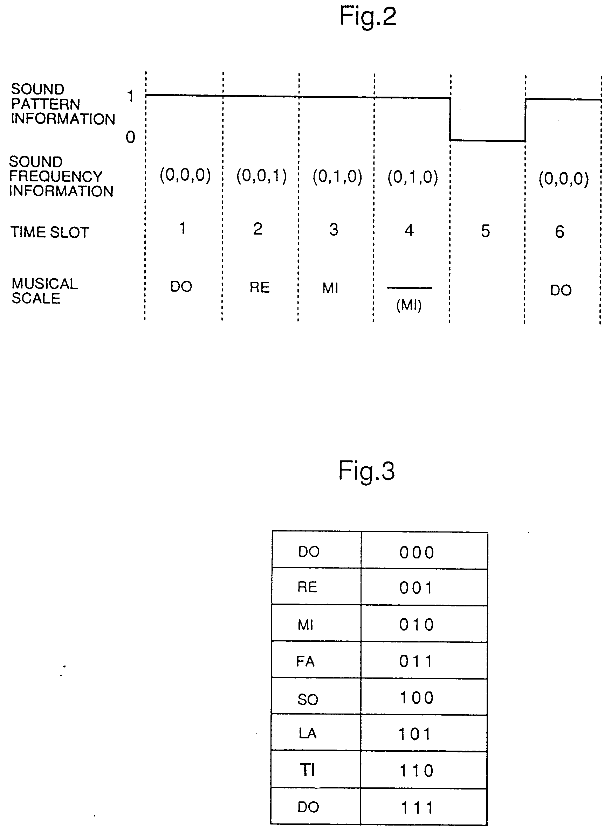

Fig.2 is an explanatory view of melody information;
Fig.3 is a table showing each note of a melody and converted 3-bit digital information corresponded thereto;

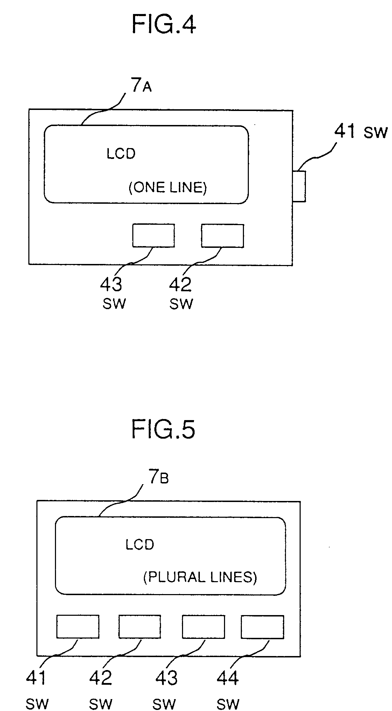

Fig.4 is a schematic view of an LCD 7A as the LCD 7 of Fig.1 provided with a display for a single line;

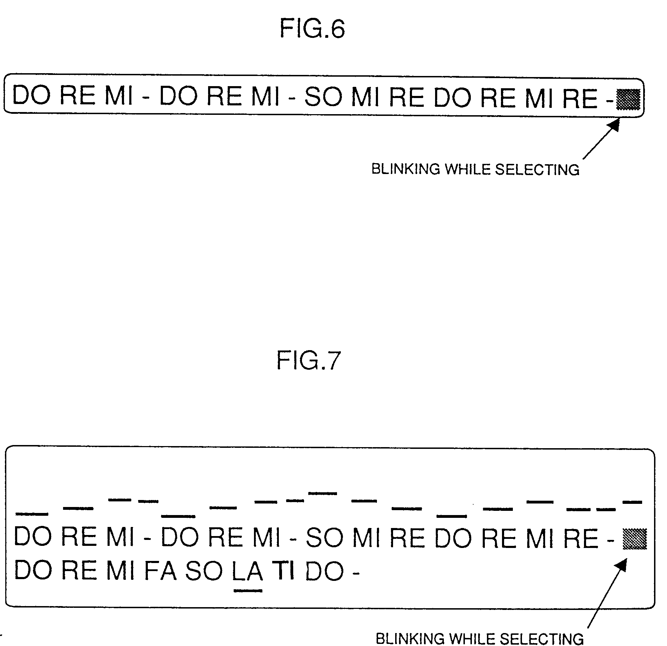

Fig.5 is a schematic view of an LCD 7B as the LCD 7 provided with a display for plural lines;
Fig.6 is a schematic view of a display screen of the LCD 7A on setting and storing melody information in the radio selective calling receiver of Fig.4;
Fig.7 is a schematic view of a display screen of the LCD 7B on setting and storing calling sound information in the radio selective calling receiver of Fig.5;

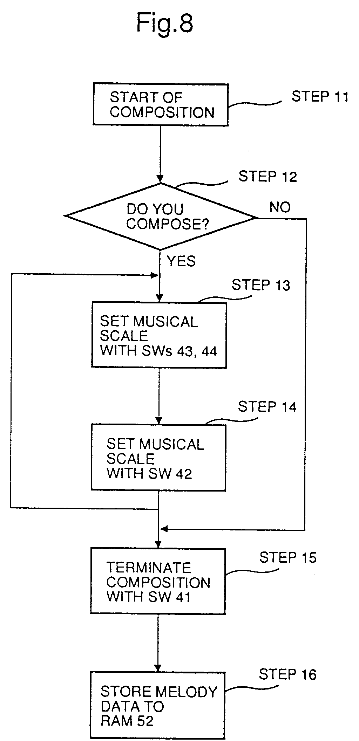

Fig.8 is a flowchart showing a procedure for composing the melody;

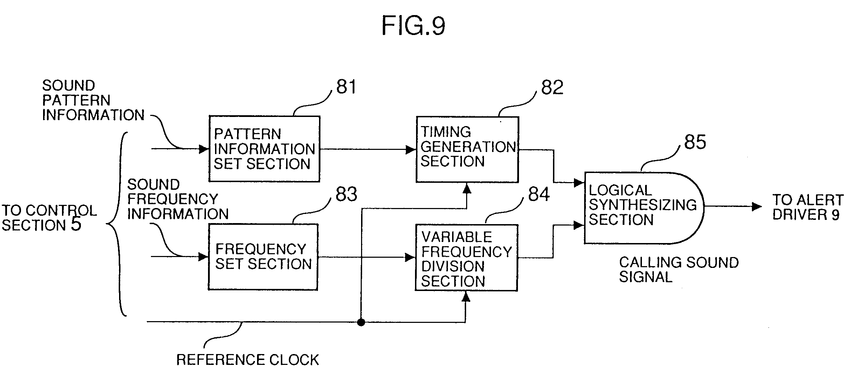

Fig.9 is a block diagram of an alert section 8;
Fig.10 is a block diagram of a first prior art;

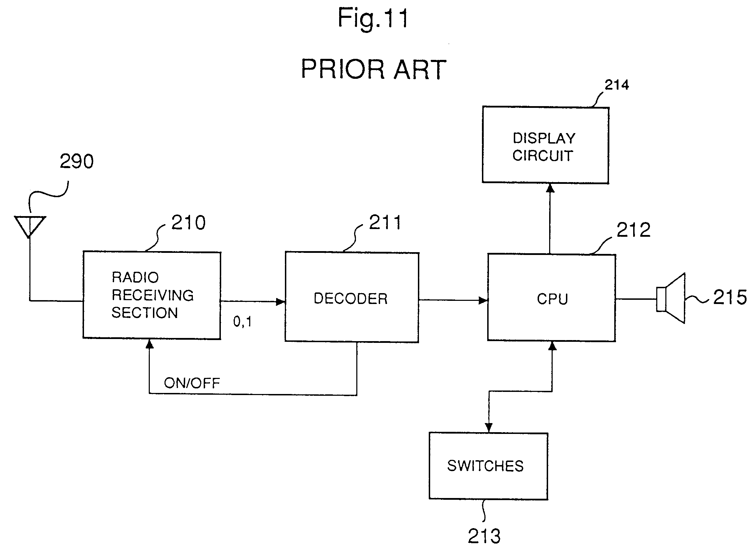

Fig.11 is a block diagram of a second prior art; and

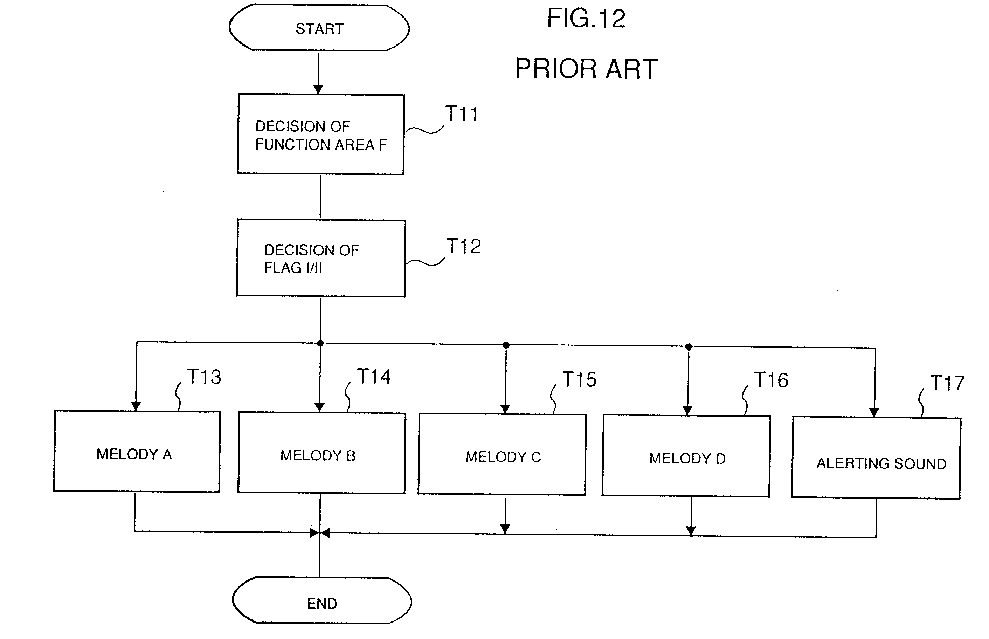

Fig.12 is a flowchart for the second prior art.

A preferred embodiment of the present invention is now described.

Fig.1 is a block diagram of a radio selective calling receiver.

A function for notifying the calling assigned to the radio selective calling receiver is described.

An antenna 1 receives a radio signal that has been FSK (Frequency Shift Keying) modulated with a selective calling signal and a data signal containing a message signal following thereto.

The radio signal is amplified at a receiving section 2, and further demodulated into a selective calling signal and a base band data signal containing the message signal.

Meanwhile, a control section 5 serves to read out its selective calling number stored in an ID-ROM 13 formed of EEPROM (Read Only Memory for electrically erasable program).

The demodulated selective calling signal and data signal are combined at a decoder 3. The decoder 3 compares its selective calling number read out via the control section 5 with the combined selective calling signal (number). If they coincide, the decoder 3 outputs the combined (composite) data signal to the control section 5.

Upon receiving the data signal, the control section 5 outputs calling sound information to an alert section 8.

The alert section 8 notifies the receiver user that the calling has been made by producing the sound from a loud speaker 10 via an alert drive 9. The calling may be notified to the receiver user through operation of a vibrator 11 via the alert driver 9. Alternatively it may be notified to the user through radiation of an LED (Light Emitting Diode) via the alert driver 9. The sound produced from the loud speaker 10 is either an alert sound or the melody that has been preset by the receiver user (described later).

Upon receiving a message signal following the selective calling signal from the decoder 3, the control section 5 actuates an LCD driver 6 to display a message which represents the message signal on an LCD (Display section using a liquid crystal display: Liquid Crystal Display) 7. The received message signal is stored in a RAM (Random Access Memory) 52 of the control section 5 simultaneously with displaying, which can be read out on the LCD 7 through operation of a switch 4 at any time.

The control section 5 comprises a CPU (Central Processing Unit) 53 for performing the aforementioned data signal processing, the RAM 52 for storing data, P-ROM51 as a ROM (Read Only Memory) for a program or the one storing character fonts, and EEPROM54 for performing optional functions.

The switching section 4 has a function to interrupt the CPU 53.

A melody composition function is hereinafter described as a feature of the present invention.

The following description relates to melody information formed of sound pattern information and sound frequency information. Fig.2 is an explanatory view of the melody information of this Embodiment.

The sound pattern information indicates existence (presence/absence) of sounds. If the sound is present, it is designated as "1", while if it is absent, it is designated as "0".

The minimum unit of one pattern (a single period for a time slot T) is determined by the sound type. It is generally designated in a range from 25 to 250 milliseconds. The sound pattern information is formed by continuously using plural patterns. For example, the sound of "1010" is a short tone sounded like "Pip Pip", and the sound of "11101110" is a long tone sounded like "Peep, Peep".

The sound frequency information indicates the note of the melody, which is formed of digital information. Fig.3 is a table showing each note used for composing the melody, and its corresponding 3 bit digital information.

For example, the note "do" is converted into (0,0,0) , and "re" is (0,0,1) . Another "do" one-octave higher than the above "do" is converted into (1,1,1).

The following explanation relates to setting and storing the melody information performed by the user.

Fig.4 is a schematic view of the LCD 7A provided with a display for a single line as the LCD 7 of the Embodiment of Fig.1. Fig.5 is a schematic view of the LCD 7B provided with a display for plural lines as the LCD 7 of Fig.5.

The radio selective calling receiver of Fig.4 is provided with a display for a single line of the LCD 7A and switches (SW) 42 and 43 of push-type on its front. It is provided with a switch (SW) 41 of the same type on its right side.

The radio selective calling receiver of Fig.5 is provided with a display for plural lines of the LCD 7B and switches (SW) 41, 42 ,43, and 44 of push-type on its front.

Both types of the radio selective calling receivers are designed to start/stop composing the melody by depressing the SW 41, and to determine the note (sound frequency information) by depressing the SW 42.

The SW 43 of Fig.4 is used for scrolling the scale to set a desired note.

The SWs 43 and 44 of Fig.5 are used for moving the note selecting cursor right and left to set a desired note.

The detailed function of the receiver is described.

Fig.6 shows a display screen of the LCD 7A on setting and storing the melody information in the radio selective calling receiver of Fig.4.

Fig.7 shows a display screen of the LCD 7B on setting and storing the melody information in the radio selective calling receiver of Fig.5.

Referring to Fig.6, depressing the SW 41 starts setting the melody information. The display of the LCD 7A displays selected notes and a note character indicating that it is being selected. It also displays a long tone symbol which represents "sound off". Flickering position on the display indicates that the note (sound frequency information) is being selected. Depressing the SW 43 starts scrolling the flickering scale up and down to select the note for the following time slot T. The same notes can be continuously produced. Other characters may be used for displaying those notes.

Referring to Fig.7, depressing the SW 41 starts setting the call sound information. The display of the LCD 7B displays two lines of selected notes sequentially. The position of the note being selected is flickering. The third line shows selectable scales. Depressing SWs 43 and 44 moves the note selecting cursor right and left on the third line so as to select a desired note (Flickering position of the note being selected simultaneously changes.). When the desired note is displayed, the SW 42 is depressed for determination, shifting to the following note selection part. Depressing the SW 41 stops composing. Horizontal bars displayed on the first line are used to provide visual support for understanding the change in the note height.

The calling sound information is used for producing the sound, for example, "do, re, mi, pause, do", in which the sound pattern and notes are combined. If the LCD 7 has a display for two lines, the two-line display may be made by combining the selected and selectable notes.

The function of the control section 5 at composing and storing the melody through operation of the switching section 4 is now described.

When the SW 42 is depressed, the switching section 4 recognizes the depression of the SW 42, and sends an interruption signal to the CPU 53. As the CPU 53 has already identified the note being selected through depression of the SW 43 (and SW 44) on receiving the interruption signal, it converts the note selected by the SW 43 as frequency information into digital information shown in Fig.3. The digital information is temporarily stored together with the pattern information.

When composition is finished by depressing the SW 41, the CPU 53 converts the temporarily stored data into digital information in parallel form to be saved in the RAM 52.

The maximum period for producing the melody is determined by the memory capacity of the RAM 52 reserved for the melody. In case the time length for producing the composed melody is shorter than the designated period, "sound off" or any other data indicating the absence of the melody is input to the rest of the area of the RAM 52.

The procedure for composing the melody is described.

Fig.8 is a flowchart representing the procedure for composing the melody of this Embodiment.

A user of the radio selective calling receiver depresses the SW 41 to start displaying a composition screen on the LCD 7 (step 11).

If no composition is required, the user depresses the SW 41 again to stop composing the melody ("No" at step 12), then proceeds to step 15. This radio selective calling receiver is so designed to select the menu of alarm setting, time setting and composition by depressing the SW 41.

In order to start composing the melody ("Yes" at step 12), a desired note (frequency information) is selected by depressing the SW 43 (and SW 44 for LCD 7B) (at step13). Depressing the SW 42 at this stage determines to select (set) the desired notes. The CPU 53 temporarily stores the set notes (step 14). The stored information is composed of pattern information "1" or "0", indicating the presence/absence of sound, and sound frequency information corresponding to the sound pattern information at every single unit of the time slot T, i.e., 3 bit digital information. When setting the melody by means of the display of the LCD 7, the call sound information is divided at a single unit time slot T (millisecond)*t(t=1,2,3,4,5,6,7,8).

When continuing further composition, the same procedures as steps 13 and 14 are repeated since the note selection position automatically shifts to the next page.

In order to finish composing, the SW 41 is depressed (step15).

When composition is finished through depression of the SW 41 (Step15), the CPU 53 stores the melody information (sound pattern information and sound frequency information) in RAM 52.

The following explanation relates to the output of composed melody to the loud speaker 10 when the radio selective calling receiver is called.

Upon receiving the above data signal from the decoder 3, the control section 5 outputs the user-composed melody information in parallel form of digital signal to the alert section 8.

Assuming that the sound frequency information as a bit structure of (0,0,0) is supplied, the alert section 8 generates a call sound signal at a frequency of 1.01KHz corresponding to the note "do". When the frequency information of (1,1,1) is supplied, it generates the call sound signal at a frequency of 2.02KHz corresponding to the note "do" which is one-octave higher.

Although the precise frequency corresponding to the note "do" is 1.038KHz, in this invention, it is set to 1.01 KHz for the purpose of constructing the clock with low-priced circuits. The call sound information for alerting may use only one frequency type of the call sound signal.

The alert section 8 is now described in detail. Fig .9 is a block diagram of the alert section 8.

The alert section 8 receives the melody information in parallel form of digital signal from the control section 5. Its pattern information is input to a pattern information set section 81, and its sound frequency information is input to a frequency set section 82.

The pattern information set section 81 converts the sound pattern information into serial signal pattern information (sound pattern) to be supplied to a timing generator 82.

The timing generator 82 receives the sound pattern and reference clock to generate a transmitting timing signal which is equivalent to the sound pattern corresponding to the sending time slot.

The frequency set section 83 decodes the sound frequency information to generate a frequency dividing number specification signal corresponding to the frequency indicated by the sound frequency information.

A variable frequency dividing section 84 divides the reference clock by the frequency dividing number corresponding to the frequency dividing number specification signal to generate a sound frequency signal. For example, assuming that the sound frequency information is a signal which defines the frequency of 1.01KHz representing the note "do", and the reference clock is the one at 38.5KHz which may be generated with low-priced circuits used for a conventional radio selective calling receiver, the variable frequency dividing section 84 divides the reference clock into 38 parts to generate the sound frequency signal at 1.01KHz. In order to obtain the sound frequency signal of one-octave higher "do", the variable frequency dividing section 84 divides the reference clock into 19 parts to output the signal at 2.02KHz.

Transmission timing signals and sound frequency signals are supplied to a logic composite section 85.

The logic composite section 85 generates an audio signal which is transmitted at transmission timing (transmission time slot) of the transmission timing signal. This audio signal is output to an alert driver 9.

The alert driver 9 drives the loud speaker 10 to sound the melody by amplifying the audio signal.

Each of the pattern information set section 81, timing generator 82, frequency set section 83, variable frequency dividing section 84, and logic composite section 85 is composed of various flip-flops and gates.

This is the end of the explanation of the Embodiment.

Saving the melody information composed by the user of the radio selective calling receiver in the EEROM54 allows the information to be kept permanently with no backup battery.

When notifying the call, the CPU 53 reads out the melody information formed of frequency information and pattern information from EEPROM54 to be supplied to the alert section 8.

In summary, in the preferred embodiment a user can set melody information formed of pattern information and sound frequency information sequentially at each time slot by operating a switching section 4, while looking at characters on a display screen of an LCD 7. The melody information is stored in a RAM 52 controlled by a CPU 53. When a receiver receives the call, a control section 5 receives the data signal and the CPU 53 reads out the melody information stored in the RAM 52 to be output to an alert section 8. A loud speaker 10 serves to notify the call by producing the melody preset by the user.

It will be understood that the present invention has been described above purely by way of example, and modifications of detail can be made within the scope of the invention.

Each feature disclosed in the description, and (where appropriate) the claims and drawings may be provided independently or in any appropriate combination.

## Claims

**1.** A radio selective calling receiver characterized by comprising:
inputting means (4) for inputting information to compose a melody;
generating means (53) for generating melody information including sound pattern information indicating the existence of a sound and sound frequency information indicating each sound frequency of said sound pattern, based on information input from said inputting means;
storing means (52) for storing said melody information;
reading means (53) for reading out said melody information from said storing means when the radio selective calling receiver has been called; and
sounding means (8, 9, 10) for outputting a melody sound based on said read out melody information.

**2.** The radio selective calling receiver of claim 1, characterized in that said inputting means (4) further comprises:
displaying means (7) for displaying a character corresponding to each said sound frequency;
means (53) for displaying said character on said displaying means (7); and
means (41 to 44) for selecting said character corresponding to a time slot of said sound pattern.

**3.** The radio selective calling receiver of claim 1 or claim 2, characterized in that said generating means (53) comprises means for converting said melody information to digital information and storing said digital information in said storing means.

**4.** The radio selective calling receiver of any of claims 1 to 3, characterized by further comprising said reading means (53) for reading out said melody information from said storing means in a parallel format and outputting said read out melody information to said sounding means.

**5.** The radio selective calling receiver of any of claims 1 to 3, characterized in that said sounding means (8, 9, 10) further comprises:
means (81) for converting said sound pattern information among said melody information from a parallel format to a serial format;
means (82) for outputting a timing signal at a time corresponding to a sound timing indicated by said sound pattern information of serial format;
means (83) for generating a frequency dividing number specification signal to specify a frequency dividing number corresponding to each sound frequency indicated by said sound frequency information;
means (84) for dividing a reference clock with a dividing number indicated by said frequency dividing number specification signal and generating a sound frequency signal;
means (85) for outputting said sound frequency signal at a transmission timing indicated by said timing signal corresponding to said sound frequency; and
means (9, 10) for outputting a melody sound, being driven by said sound frequency signal.

**6.** A radio selective calling receiver having: demodulating means (2) for receiving and demodulating a radio signal modulated with a selective calling signal and a data signal including a message information following said radio selective calling signal; a decoder (3) for comparing said demodulated selective calling signal and the user's own selective calling signal and decoding said data signal when said two selective calling signals coincide; and message displaying means (7) for displaying said message information, characterized by comprising:
inputting means (4) for inputting information to compose a melody;
generating means (53) for generating melody information including sound pattern information indicating sound existence and sound frequency information indicating each sound frequency of said sound pattern, based on information input from said inputting means;
storing means (52) for storing said melody information;
controlling means (53) for reading out said melody information from said storing means and displaying said message information on said displaying means (7) when having received said data signal; and
calling means (8, 9, 10) for outputting a melody sound, based on said read out melody information.

**7.** The radio selective calling receiver of claim 6, characterized in that said inputting means (4) further comprises:
means (53) for displaying a character corresponding to each said sound frequency on said displaying means (7); and
means (41 to 44) for selecting a character corresponding to a time slot of said sound pattern by scrolling characters displayed on said displaying means (7) .

**8.** The radio selective calling receiver of Claim 6 or 7, characterized in that said generating means (53) comprises means for converting said melody information to digital information and storing said digital information in said storing means.

**9.** The radio selective calling receiver of any of claims 6 to 8, characterized by further comprising said controlling means (53) for reading out said melody information from said storing means in a parallel format and outputting said read out melody information to said calling means.

**10** The radio selective calling receiver of any of claims 6 to 9, characterized in that said calling means (8, 9, 10) further comprises:
means (81) for converting said sound pattern information among said melody information from a parallel format to a serial format;
means (82) for outputting a timing signal at a time corresponding to a sound timing indicated by said sound pattern information of serial format;
means (83) for generating a frequency dividing number specification signal to specify a frequency dividing number corresponding to each sound frequency indicated by said sound frequency information;
means (84) for dividing a reference clock with a dividing number indicated by said frequency dividing number specification signal and generating a sound frequency signal;
means (85) for outputting said sound frequency signal at an output timing indicated by said timing signal corresponding to said sound frequency signal; and
a speaker (10) for outputting a melody sound, being driven by said sound frequency signal.

**11.** A calling sound control method for a radio selective calling receiver characterized by comprising:
a step of inputting a sound pattern indicating the existence of a sound and the sound frequency of each sound of said sound pattern;
a step of converting said sound pattern and said sound frequency that have been input to melody information including sound pattern information and sound frequency information;
a step of storing said melody information;
a step of reading out said stored melody information when the radio selective calling receiver has been called; and
a step of outputting a melody sound, based on said read out melody information.

**12.** The calling sound control method for a radio selective calling receiver of claim 11, characterized in that said inputting step comprises:
a step of displaying respective characters corresponding to respective said sound frequencies; and
a step of selecting a character among said characters corresponding to a time slot of said sound pattern.

**13.** The calling sound control method for a radio selective calling receiver of claim 11 or 12, characterized in that said converting step further comprises a step of converting said sound pattern and said frequency to digital information.

**14.** The calling sound control method for a radio selective calling receiver of any of claims 11 to 13, characterized in that said reading step comprises:
a step of receiving and demodulating a radio signal modulated with a selective calling signal and a data signal including a message signal following said selective calling signal; and
a step of comparing said demodulated selective calling signal and the user's own selective calling signal and reading out said stored melody information when both selective calling signals coincide.

**15.** The calling sound control method for a radio selective calling receiver of any of claims 11 to 14, characterized in that said calling step further comprises:
a step of converting said sound pattern information among said melody information from a parallel format to a serial format;
a step of outputting a timing signal at a time corresponding to a sound timing indicated by said sound pattern information of serial format;
a step of generating a frequency dividing number specification signal to specify a frequency dividing number corresponding to each sound frequency indicated by said sound frequency information;
a step of dividing a reference clock with a dividing number indicated by said frequency dividing number specification signal and generating a sound frequency signal;
a step of outputting said sound frequency signal at an output timing indicated by said timing signal corresponding to said sound frequency; and
a step of calling using a sound being driven by said sound frequency signal.
